# EUROPÄISCHE PATENTANMELDUNG

(11) **EP 1 520 932 A2**
(43) Veröffentlichungstag der Anmeldung: **06.04.2005**
(21) Anmeldenummer: 04023476.7
(22) Anmeldetag: 01.10.2004
(51) Int. Cl.: E01C 7/26, C08L 95/00, C08K 7/02

(54) **Stabilisierender Zuschlagstoff in der Asphaltindustrie aus Hanf, Flachs/Kultur-Lein**

(30) Priorität: 02.10.2003 DE 10347225
(71) Anmelder: Ullrich, Siegmar, 01825 Liebstadt (DE)
(72) Erfinder: Ullrich, Siegmar, 01825 Liebstadt (DE)

(57) **Zusammenfassung**

Die Erfindung betrifft einen Stabilisierender Zuschlagstoff für Asphalte.
Erfindungswesentlich ist, dass der Zusatzstoff als organische Faser in Form von Hanf oder Flachs/ Lein zugesetzt wird oder eine Mischung aus Hanf oder Flachs/ Lein mit Cellulosefasern aus Altpapier bei einer Faserlänge von 0,3-3,00 mm. Die Dosierung beträgt 0,3 % bezogen auf die Gesamtmasse Asphalt.
Asphalte mit dem erfindungsgemäßen Zusatzstoff sind insbesondere für den Einsatz im Straßenbau geeignet.

## Beschreibung

Splittmastixasphalt besteht aus Edelsplitt mit besonders hohem Großkornanteil, Brechsand, Gesteinsmehl, Straßenbaubitumen und stabilisierenden Zusätzen.

Splittmastixasphalt wurde erstmals in den sechziger Jahren hergestellt. Zu dieser Zeit gab es eine Häufung von Verkehrsunfällen auf Deutschlands Straßen. Es wurde nach einem neuen Straßenbelag verlangt, der Splittmastixasphalt konnte die neuen Anforderungen erfüllen.
- hohe Standfestigkeit unter schwerer Verkehrsbeanspruchung
- hohe Standfestigkeit bei hohen Temperaturen
- ein sich selbst schützendes Splittgerüst
- hoher Widerstand gegen Verschleiß
- Verhinderung des Ablaufens des Bitumens bei der Herstellung, beim Transport und beim Einbau des Mischgutes durch den Einsatz einer Cellulosefaser ( stabilisierender Zusatz)

Im Jahre 1984 wurde der Splittmastixasphalt in die ZTVbit-StB 84 als Standardbauweise aufgenommen. Er hat sich bis heute hervorragend für die Baumaßnahmen unter extremen klimatischen Bedingungen und unter hohen bis höchsten Verkehrsbelastungen bewährt.
Die neuesten Anforderungen des Splittmastix sind in der ZTVbit-StB 2001 geregelt.

### Stabilisierende Zusätze

Ein stabilisierender Zusatz ist vornehmlich ein Bindemittelträger, der die Aufgabe hat die Homogenität des Asphalts zu stabilisieren und das Ablaufen des Bindemittels zu verhindern.
Die Zugabe der stabilisierenden Zusätze erfolgt in der Asphaltmischanlage am Mischer in verschiedenster Form.
- als Paketform
- als Big Bag
- in Silozügen

Zum gegenwärtigen Stand der stabilisierenden Zusätze ist folgendes zu sagen:
- Zum Großteil wird diese Faser aus recycelfähigem Altpapier hergestellt.
- Die Rückstände von Altpapier weisen teilweise eine zu geringe Saugfähigkeit auf, denn es kann nicht verhindert werden, dass Hochglanzpapier in die Verarbeitungskette mit einfließt.
   Die Altpapierindustrie ist nicht in der Lage das gut saugfähige Altpapier in der benötigten Abnahmemenge bereitzustellen.
- Beim Einbau von Splittmastixasphalt kann es durch diesen Qualitätsmangel (Altpapierzusatz/zu viel Glanzpapieranteil) an der Oberfläche der Straßendecke zu glänzenden Flecken ( Bindemittelanhäufung) kommen. (siehe Foto Anlage)
- siehe Ablauftest , Schellenberg

Es gibt auch ein Verfahren den stabilisierenden Zusatzstoff aus Recycling-Naturfaser (Jutesäcke) herzustellen.
Das wird aber bis zum heutigen Tag auf dem Markt nicht angeboten, dies ist auf folgendes zurückzuführen:
- zu geringes Aufkommen an Jutesäcken
- zu geringe Saugwirkung, die benötigte Qualität der Jutefaser ist nicht durchgängig gewährleistet,
- Ursache ist das unterschiedliche Ausgangsmaterial sowie Verschmutzung durch vorherige Verwendung der Säcke.

Es gibt auch Versuche die Zusatzfaser aus Schilf herzustellen.

### Auf der Suche nach einem geeigneten stabilisierenden Zuschlagstoff stieß ich auf die Naturfaser von HANF und FLACHS, KULTUR-LEIN

Eine Verwendung von Hanf und Flachs/Lein aus heimischer, landwirtschaftlicher Produktion ist von großem ökonomischem und ökologischem Nutzen, auch im Sinne der Verwendung nach dem Grundsatz der nachwachsenden Rohstoffe.

In einem technologischen Verfahren wird die Pflanze in zwei Bestandteile getrennt, einmal in die Schäben und in die benötigte Faser. Diese Faser wird nun in einer axialfördernden Hammermühle zu einer Faserlänge von 0,5 - 3mm aufbereitet.
Bei dieser Aufbereitung der Faser können bis zu 10% der Schäben mit Verwendung finden.
Dieser neue stabilisierende Faserzusatz wird nun dosiert mit 0,3% pro Tonne dem Splittmastix zugegeben.

In mehreren Laborversuchen wurden unterschiedliche Ausgangsstoffe, Hanf und Flachs/Lein , in unterschiedlichen Fasergrößen und Faserzusammensetzungen getestet,
und durch den Bindemittel-Ablauftest nach Schellenberg ausgewertet.

Die besten Werte brachte die bereits beschriebene Zusammensetzung.
Bei den unterschiedlichsten Ablauftests lagen die Werte von 0,08 bis 0,15%. Auch bei mehreren Versuchen in der Praxis, direkt in der Splittmastixherstellung 0/11 und 0/8 mit unterschiedlichem Bindemittelgehalten von 6,4 bis 7,6% kam es auf den Baustellen zu keinem Bindemittelaustritt an der Oberfläche. (bei gleichem Faseranteil von 0,3% wie bei Cellulosefaser)

Anlage: Ablauftest SMA 0/8 und 0/11 (Seite 6)

### Ablauftest

| SMA 0/8 S REIN/0 506 39/02 | | Bitumen 50/70 | |
|---|---|---|---|
| | | AW bei Faseranteil von: | |
| Faser: **HANF** | **Art der Anhaftung** | **0,3%** | |
| Entnahme MW Kübel | mit anhaftenden Splitt | 0,15% | |
| 21.06.2003 | ohne anhaftenden Splitt | 0,11 % | |
| | | | |
| Entnahme Baustelle | mit anhaftenden Splitt | 0,21% | |
| 21.06.03 10.45 Uhr | ohne anhaftenden Splitt | 0,15% | |
| | | | |
| Vergleichsprobe Viatop66 | mit anhaftenden Splitt | 0,08% | |
| 24.06.2003 | ohne anhaftenden Splitt | 0,06% | |

| SMA 0/11 S DOHM/0 508 32/03 Bitumen 50/70 | | | |
|---|---|---|---|
| | | AW bei Faseranteil von: | |
| Faser: **HANF** | **Art der Anhaftung** | **0,3%** | |
| Entnahme MW Kübel | mit anhaftenden Splitt | 0,17% | |
| 19.06.03 9.00Uhr | ohne anhaftenden Splitt | 0,10% | |
| | | | |
| Entnahme MW LKW | mit anhaftenden Splitt | 0,14% | |
| 19.06.03 14.15 Uhr | ohne anhaftenden Splitt | 0,11% | |
| | | | |
| Entnahme Baust._{(Liebenau Bush)} | mit anhaftenden Splitt | 0,14% | |
| 19.06.03 16.15 Uhr | ohne anhaftenden Splitt | 0,11 % | |

### Prüfung zur Quellfähigkeit

Um einen Nachweis für den unbedenklichen Einsatz von Hanf und Flachs zu erhalten, wurde von der unabhängigen Firma SAXOTEST Ing. GmbH Dresden eine vergleichende Prüfung zur Quellfähigkeit von Asphalt in Verbindung mit Hanf und Flachs zum herkömmlichen Einsatz von Zellulosefasern durchgeführt.

### Tabelle : Marshallprüfkörper 1 / Werteprüfung des herkömmlichen Materials Zellulosefaser

### Tabelle: Marshallprüfkörper 2 bis 9 / Werteprüfung mit Hanf- und Flachsfaser

### Prüfergebnisse:

| Prüfkörper Nr. | Bezeichnung | Volumen vor Quellung in cm³ | Volumen nach Quellung in cm³ | Volumenzunahme in % |
|---|---|---|---|---|
| 1 | Dohma SMA | 509,3 | 509,9 | 0,12 |
| | | | | |
| 2 | III/0,3 | 501,6 | 502,5 | 0,18 |
| 3 | III/0,6 | 510,2 | 510,9 | 0,14 |
| | | | | |
| 4 | IV/0,3 | 502,4 | 503,2 | 0,16 |
| 5 | IV/0,6 | 500,7 | 501,5 | 0,16 |
| | | | | |
| 6 | V/0,3 | 496,5 | 497,3 | 0,16 |
| 7 | V/0,6 | 502,2 | 504,5 | 0,46 |
| | | | | |
| 8 | VI/0,3 | 498,4 | 498,5 | 0,02 |
| 9 | VI/0,6 | 502,2 | 502,2 | 0 |

### Hinweise zu den Prüfergebnissen:

Die Untersuchung wurde jeweils an Einzelprüfkörpem verschiedener Zusammensetzung durchgeführt. Damit sind die Ergebnisse nur als Tendenz, niemals aber als Absolutwerte anzusehen. Zur Absicherung der Ergebnisse sind weitere Untersuchungen notwendig.

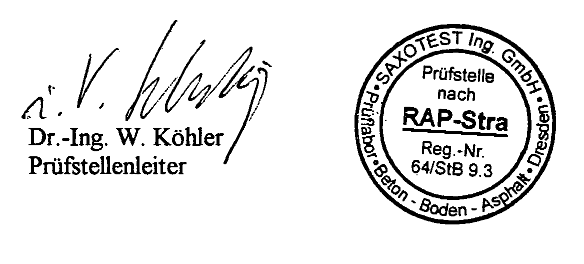

### Zugabe und Mischbarkeit des neuen Faserzusatzes:

### manuelle Zugabe:

Der stabilisierende Zuschlagstoff wird lose in Plastiksäcken dem Mischprozeß zugegeben, wobei das PE-Plastikmaterial sofort zerschmilzt und den Inhalt frei gibt. Bei Einhaltung der Vormischzeit und Mischzeit in der Asphaltmischanlage verteilt sich der Faserzusatz gleichmäßig.

### mechanische Zugabe:

Die Faser wird über eine Pelletierpresse zu Pellets (5,00 x 5,00 mm ) gepresst. Diese sind mit einer Melasse versetzt damit beim Transport vom Aufgabebehälter zum Mischer kein Zerfall zustande kommt.
Diese Pellets werden in Big Bags verpackt oder per Silozug einer Granulatstation zugeführt.

### mögliche Mischbarkeit:

Dieser neue stabilisierende Zuschlagstoff aus Hanf oder Flachs/Lein ist auch mischbar mit der bereits bekannten Cellulosefaser aus Altpapier, denn beide Ausgangsstoffe haben ähnliche Eigenschaften.
Der Zuschlagstoff aus Hanf oder Flachs/Lein weist eine sehr konstante Saugfähigkeit auf, somit ist eine dauerhafte, Qualität des stabilisierenden Zusatzes gewährleistet.
Das wäre also eine überlegene Verbesserung der Qualität gegenüber der herkömmlich verwendeten Cellulosefaser.

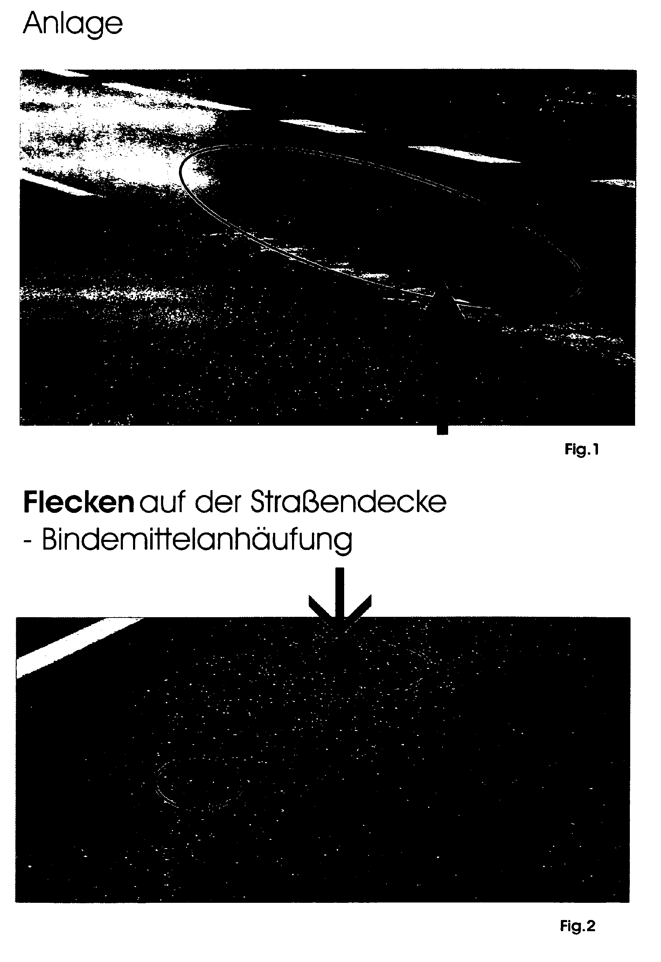

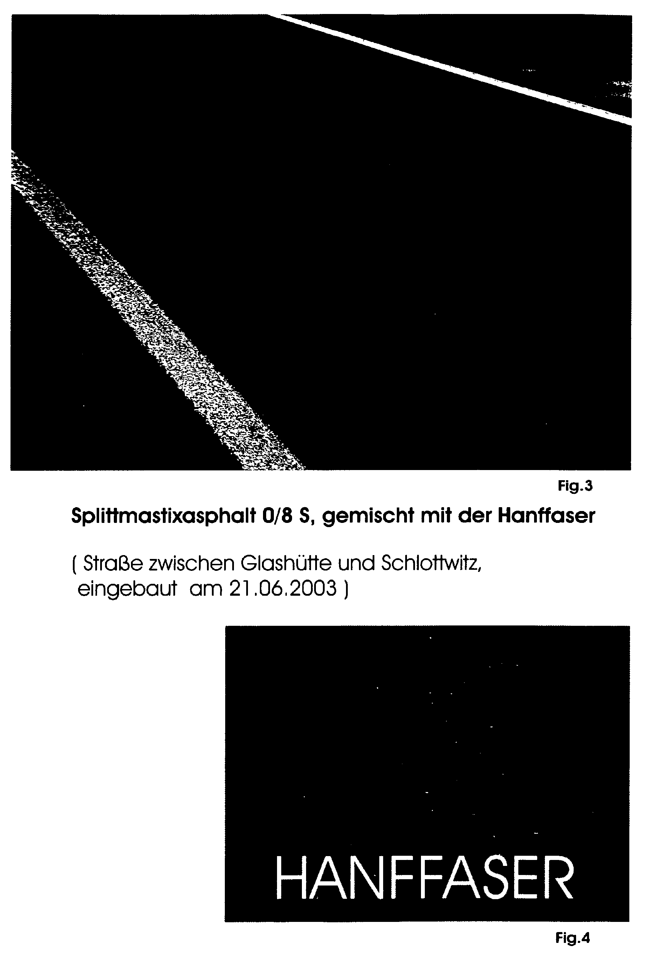

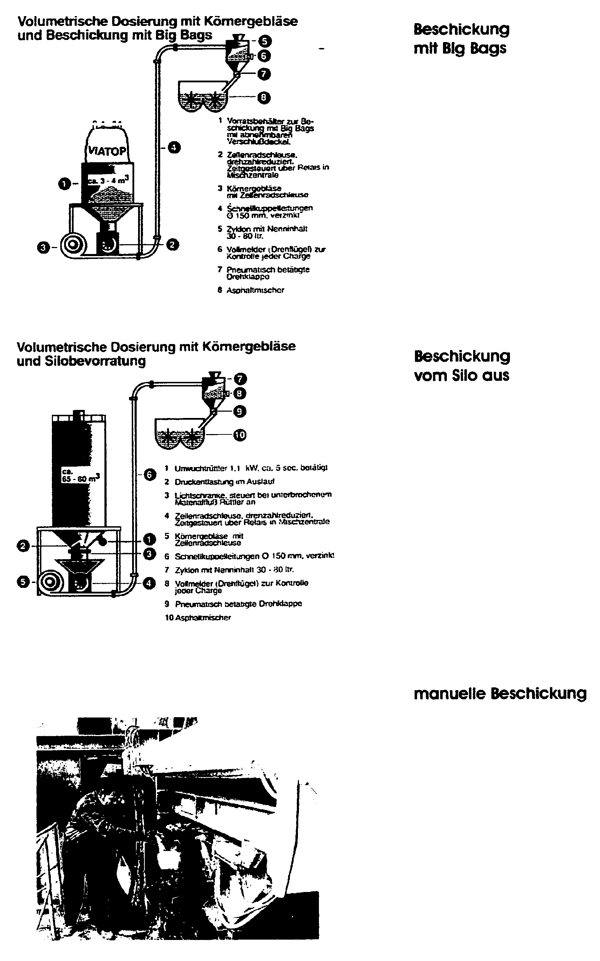

## Patentansprüche

1. Stabilisierender Zusatzstoff für Asphalte, die insbesondere für den Straßenbau bestimmt sind, **dadurch gekennzeichnet, dass** der Zusatzstoff als organisches Fasermaterial in Form von Hanf oder Flachs/Lein, allein oder anteilmäßig mit anderen Faserstoffen (Cellulosefaser aus Altpapier) in Form eines Gemisches besteht.
Die Faserlänge muß 0,3 - 3,00 mm aufweisen.

2. Zusatzstoff nach Anspruch P.1., **dadurch gekennzeichnet, dass** die Dosierung um die 0,3% liegt, dies natürlich in Abhängigkeit von den jeweiligen Bitumen- und Gesteinsmaterialien.

3. Zusatzstoff nach Anspruch P.1. und P.2., **dadurch gekennzeichnet, dass** die Faser in Plastikgebinden abgefüllt ist, manuell zugegeben wird, nach Chargengröße des Mischers.
Die Pelletierung erfolgt in den Abmessungen (5,0 x 5,0 mm), diese sind mit einer Melasse versetzt, die einen mechanischen Transport zum Mischer ermöglicht.
